Europäisches Patentamt

European Patent Office

Office européen des brevets

(19)

(11) Publication number: **0 052 378**
**B1**

# EUROPEAN PATENT SPECIFICATION

(12)

(45) Date of publication of patent specification: **27.01.88**

(21) Application number: **81109747.6**

(22) Date of filing: **17.11.81**

(51) Int. Cl.⁴: **B 29 C 35/04**

(54) Method for vulcanizing an elastomer.

(30) Priority: **18.11.80 JP 163061/80**
**24.07.81 JP 116644/81**

(43) Date of publication of application:
**26.05.82 Bulletin 82/21**

(45) Publication of the grant of the patent:
**27.01.88 Bulletin 88/04**

(84) Designated Contracting States:
**DE FR GB IT**

(56) References cited:
**FR-A-2 265 529**
**GB-A- 339 303**
**GB-A-1 285 246**
**GB-A-1 501 943**
**US-A-1 808 429**

(73) Proprietor: **SUMITOMO RUBBER INDUSTRIES**
**LIMITED**
**No. 1-1, Tsutsui-cho 1-chome**
**Chuo-ku Kobe-shi Hyogo 651 (JP)**

(72) Inventor: **Sakon, Tohachiro**
**15-12, 2-chome, Heiwadai-cho**
**Nagata-ku Kobe (JP)**
Inventor: **Arimatsu, Toshio**
**8-8, 2-chome, Matsunouchi**
**Akashi-shi Hyogo (JP)**

(74) Representative: **Eder, Eugen, Dipl.-Ing.**
**Patentanwälte Dipl.-Ing. E. Eder Dipl.-Ing. K.**
**Schieschke Elisabethstrasse 34**
**D-8000 München 40 (DE)**

Courier Press, Leamington Spa, England.

## Description

The invention relates to a method for vulcanizing an elastomer in a vulcanizing chamber using a mixture of a low thermal capacity gas and a high thermal capacity thermal fluid.

From the prior art a "method of regulating and maintaining heat transfer" is already known (US—PS 1,808,429). This method relates to the use of a gas-steam mixed fluid the temperature of which in the vulcanization chamber is maintained at a desired level by controlling the gas pressure alone.

That is, the cited process is mainly characterized in that a preliminarily calculated amount of gas and a preliminarily calculated amount of steam are mixed to obtain a gas-steam mixed fluid having a desired level of temperature, and temperature decrease during the process of vulcanization is supplemented by the addition of a high pressure steam.

As stated above, according to the cited reference, only a high pressure steam is fed in order to supplement temperature decrease and therefore there is always a danger of the products being overcured because of an unavoidable and excessive rise in temperature. For example, steam having a pressure equal to or a little higher than that of the mixed fluid in the vulcanization chamber can only be fed into the vulcanization chamber if and when the pressure in the vulcanization chamber decreases due to pressure leakage, but in this case the feeding of such a high pressure steam alone will naturally cause an excessive temperature increase. Furthermore, according to the reference, steam having a pressure higher than that of the mixed fluid in the vulcanization chamber can never be fed into the vulcanization chamber if and when the temperature decreases; but the pressure in the vulcanization chamber did not so decrease, and in this case the temperature will remain unsupplemented at a decreased level, which is a problem.

The prior art furthermore comprises "a method for moulding and curing elastomeric articles" (GB—PS 1,501,943). This printed publication describes a vulcanizing method wherein at first only steam is fed into the chamber, the steam being held at the original pressure until the material to be treated has reached a certain processing stage; then gas is supplied and mixed with steam, the mixture obtained being maintained at a second pressure.

This means that according to this method high pressure cannot be obtained without raising the temperature excessively from the start of vulcanization since the mixed fluid of steam and gas is not used as a vulcanizing heating medium from the start of vulcanization, but only steam is used in the first stage and the mixed fluid of steam and gas are apt to be separated from each other with steam accumulated in the upper portion of the vulcanizing chamber and gas accumulated in the lower portion of the vulcanizing chamber, whereby the temperature is raised in the upper portion of the vulcanizing chamber and lowered in the lower portion of the vulcanizing chamber, this difference in temperature obstructing homogenous vulcanization since steam and gas are fed in separately.

In the case where the temperature in the vulcanization chamber is lowered in the process of vulcanization and as a result steam must be replenished, steam having a lower pressure than that in the vulcanizing chamber cannot be replenished in said vulcanizing chamber once gas is fed in the second stage, which means that it is impossible to maintain the temperature in the vulcanizing chamber at the predetermined certain constant level throughout the vulcanization process.

Furthermore, since saturated steam is generally used as a high thermal capacity fluid, the above conventional method has the following disadvantages due to proportional interrelation existing between the temperature and the pressure

(1) If the temperature is held proper, the pressure is excessively reduced thereby making it impossible to satisfactorily exhaust the air accumulated between the metal molds and the elastomer to be vulcanized. Thus there is a tendency that bareness arises on the surface of the vulcanized elastomer and imperfect adhesion occurs in the part of the carcass.

(2) If the pressure is held proper, the temperature is excessively elevated. Thus the elastomer is overvulcanized resulting in deterioration of rubber or cord.

As prior art there furthermore is known a method and a device for avoiding failures with molds of pneumatic tires (FR—PS 2,265,529). Here, two mixing valves are used which in combination with the pertaining conduits and control means result in a complicated structural make-up.

The problem underlying the present invention is to create a method and a device working effectively and capable of feeding even a medium having a pressure higher than that of the mixed fluid into the vulcanization chamber or the mixer without the problem of an excessive rise in temperature by discharging the mixed fluid from the vulcanization chamber or from the mixer.

This problem is solved with the features of the patent claims, the advantage being the following:

The present invention can cope with any pressure decrease by means of feeding a gas. Also, the present invention provides a means of feeding not only a gas or a steam but also a mixed fluid having a pressure lower than that of the vulcanizing chamber from the mixer or from the ejector into the vulcanizing chamber.

Furthermore, the present invention enables to obtain proper vulcanization without surface bareness at low cost by means of a mixture of a low enthalpy gas and high thermal capacity thermal fluid, e.g., steam, controlled to an optional temperature and pressure.

The invention will hereinunder be described in detail in reference to the accompanying drawings.

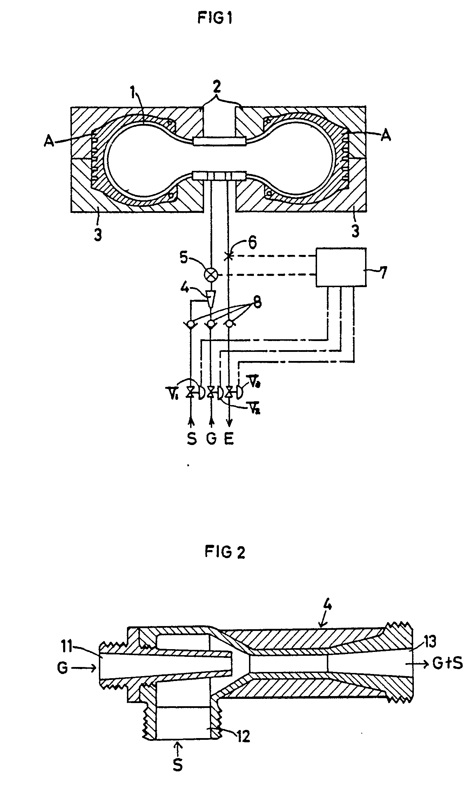

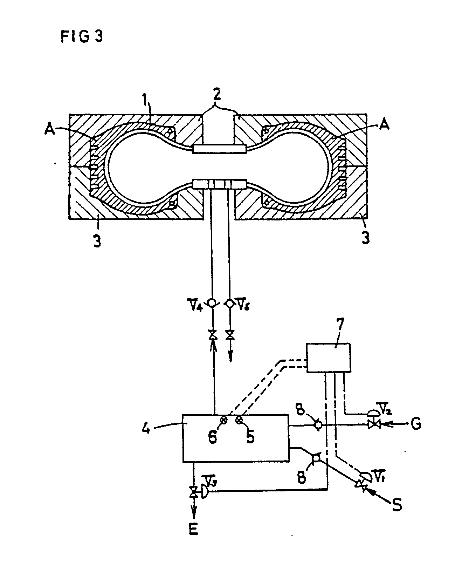

Fig. 1 is a diagram showing an embodiment of the vulcanization method according to the invention, wherein a tire (A) is used as an example of vulcanizable elastomers. Fig. 1 shows the state in which vulcanization of said tire (A) set in the vulcanizing chamber or metal molds with interposition of a bladder has made a considerable progress. Fig. 2 is a longitudinal sectional view of an ejector which is a mixer. Fig. 3 is a diagram showing another embodiment of the vulcanization method according to the invention.

Referring to Fig. 1, the numeral 1 designates a bladder with its outer periphery inflated by the supply of fluid, 2 designating an upper metal mold, 3 designating a lower metal mold. The tire (A) is interposed between the bladder 1 and the metal molds 2, 3. The numeral 4 designates a mixer, the mixer 4 being adapted to receive steam (S) and gas (G), the mixed fluid being supplied to the bladder 1 in the vulcanizing chamber. The numeral 5 designates a pressure sensor, 6 designating a temperature sensor, 7 designating a controller with a microcomputer incorporated therein. The numeral 8 designates a check valve, $V_1$, $V_2$, $V_3$ designating automatic control valves provided in the pipes of the steam (S), gas (G) and exhaust (E), respectively.

The controller 7 is adapted to detect the pressure by the pressure sensor 5 in the supply route of the mixed fluid supplied to the vulcanizing chamber from the mixer and the temperature by the temperature sensor 6 in the discharge route of the exhaust gas (E). In the controller 7 there are preliminarily stored the conditions of proper pressure and temperature so that the flow rate of the steam and gas to the mixer can be controlled and the mixed fluid can be discharged by operating the automatic control valves respectively thereby enabling to supply mixed fluid of required pressure and temperature to the vulcanizing chamber. The pressure sensor 5 and the temperature sensor 6 for detecting the pressure and temperature respectively may be provided inside the mixer 4 as shown in Fig. 3. The vulcanization method shown in Fig. 3 is same as in the case of Fig. 1.

In Fig. 3, $V_4$ designates an automatic control valve for supply of the mixed fluid into the vulcanizing chamber and $V_5$ designates an automatic control valve for exhaust of the mixed fluid out of the vulcanizing chamber.

The invention will hereinunder be described in more detail in reference to the case in which the vulcanizable elastomer is, for example, a tire of the size of 1000—20.

The conditions of vulcanizing a tire of the size of 1000—20 are within the scope of the temperature 140—200°C and the pressure 15—30 N/mm². For example, the conditions of 170°C and 28 N/mm² are preliminarily stored in the controller 7, a raw tire being set in the metal molds, the automatic control valves $V_1$, $V_2$ being opened while the automatic control valve $V_3$ is closed, thereby supplying the steam (S) and gas (G) to the mixer 4.

The mixed fluid mixed in the mixer is supplied into the metal molds. Thus the vulcanization starts. In course of the heat treatment by means of said mixed fluid, the pressure and temperature of the mixed fluid are continuously entered as inputs into the controller thereby enabling said controller to control the apertures of the automatic control valves of the steam and gas $V_1$, $V_2$ in conformity with said conditions of 170°C—28 N/mm².

The control in case of excess or deficiency of the pressure and temperature of the mixed fluid is effected as follows. If the temperature alone is short of the standard level, the valves $V_1$, $V_2$ and $V_3$ are opened, while if the pressure is higher than the standard level and the temperature is short of the standard level, the valve $V_3$ is first opened to discharge the mixed fluid, said valve $V_3$ being subsequently closed, the valves $V_1$, $V_2$ being then opened thereby supplying the steam and the gas.

If the pressure alone is short of the standard level, the valve $V_2$ is opened with the valves $V_1$, $V_3$ remaining closed so that the gas may be supplied to the mixer in large amount.

In the invention, no particular limitation is placed on the mixer 4 for use in mixing the steam and the gas. The mixer may be, for example, an ejector as shown in Fig. 2 in which gas (G) is introduced through an opening (11), steam (S) supplied through an opening (12) being sucked by the gas pressure, the mixed fluid (G & S) being jetted through the discharge port 13.

The vulcanization (the vulcanizing process) of the tire is completed by supplying thereto a mixed fluid of the aforesaid conditions for 40—50 minutes.

The same is applicable to the case in which vulcanization is effected without interposition of the bladder.

After the heat treatment, the automatic control valve $V_5$ communicating with the exhaust port is opened, while the steam and gas control valves $V_1$, $V_2$ are closed, so as to discharge the mixed fluid. Thus the heat treatment is completed.

The whole vulcanizing process is completed through the conventionally known steps, such as water cooling process and the like.

The elastomers vulcanizable by the method according to the invention comprise fenders, sleeves, hoses, etc., in addition to tires described in the embodiment of the invention.

As described hereinbefore, the vulcanization method according to the invention is characterized in that a mixed fluid of steam and gas preliminarily blended by a mixer provided outside the vulcanizing chamber is supplied into said chamber or steam and gas independently supplied to the vulcanizing chamber are mixed directly in said chamber, a controller with a microcomputer incorporated therein being used in order to set and continuously maintain the mixed fluid at the pressure and temperature conditions most suitable for vulcanization thereby enabling to obtain high pressure without permitting the temperature to rise in excess in the initial stage of vulcanization of the elastomer. Thus the invention enables to obviate surface bareness due to excess or deficiency of pressure and temperature and overvulcanization resulting in deterioration of rubber and cord.

The invention has a further advantage in that the waste of energy can be prevented since the thermal value is continuously controlled in conformity with the predetermined conditions.

**Claims**

1. A method of vulcanizing an elastomer in a vulcanizing chamber using a mixture of a low thermal capacity gas and a high thermal capacity thermal fluid, characterized by the following process steps:

a) introducing the low thermal capacity gas (G) and the high thermal capacity thermal fluid (S) into a mixer (4) located outside the vulcanizing chamber to obtain the mixture of vulcanizing medium; the mixer (4) being of either an ejector type or a non-ejector type;

b) vulcanizing the elastomer using the mixture that has been fed into the vulcanizing chamber from the start of the vulcanizing process;

c) measuring the actual temperature and the pressure in the vulcanizing chamber or in the mixer all the time during the process of vulcanization and controlling the supply of the low thermal capacity gas and the high thermal capacity thermal fluid and the discharge of the mixture from the vulcanizing chamber or from the mixer so as to maintain the temperature and the pressure at a predetermined constant level optimal for vulcanization throughout the process of vulcanization by the use of a controller with a microcomputer (7) incorporated therein, working in response to the signals from a temperature sensor and a pressure sensor located inside or outside said mixer;

the fluid (S), in case where the fluid (S) has a pressure lower than that of the mixed fluid in the vulcanization chamber or in the non-ejector type mixer, being fed either under suction by the high pressure gas (G) introduced into the ejector of the mixer (4) or by discharging to an appropriate extent the mixed fluid from the non-ejector type mixer (4) to reduce the pressure of the mixed fluid.

2. Method according to claim 1, comprising means for providing a mixture as a vulcanizing heating medium by mixing a high thermal capacity thermal fluid and a low thermal capacity gas, characterized by a pressure sensor (5) and a temperature sensor (6) located outside or inside the said means detecting respectively the pressure and the temperature of the mixture and giving signals;

a controller with a microcomputer (7) incorporated therein controlling, in response to the signals from the said pressure sensor (5) and temperature sensor (6), the opening and closing of a low thermal-capacity gas valve, a high thermal capacity fluid valve and/or an exhaust valve so as to maintain the pressure and temperature of the mixture at a predetermined constant level optimal for vulcanization;

and a vulcanizing chamber vulcanizing elastomer products by the mixture maintained at the said desired constant value.

3. Method according to claim 2, characterized in that the means for providing the mixture is an ejector type mixer which is located outside the vulcanizing chamber and connected thereto.

4. Method according to claim 2, characterized in that the means for providing the mixture is a non-ejector type mixer (4) which is located outside the vulcanizing chamber and connected thereto.

**Patentansprüche**

1. Verfahren zum Vulkanisieren eines Elastomers in einer Vulkanisierungskammer unter Verwendung eines Gases mit einem niedrigen Wärmewirkungsgrad und eines Fluids mit hohem Wärmewirkungsgrad, gekennzeichnet durch die folgenden Verfahrensschritte:

a) Einspeisen des Gases (G) mit niedrigem Wärmewirkungsgrad und des Fluids (S) mit hohem Wärmewirkungsgrad in einen Mischer (4), der außerhalb der Vulkanisierungskammer angeordnet ist, so daß das Gemisch aus vulkanisierendem Medium erhalten wird, wobei der Mischer vom Nicht-Ejektor-Typ bzw. Ejektor-Typ ist;

b) Vulkanisieren des Elastomers unter Verwendung des Gemisches, welches zu Beginn des Vulkanisierungsprozesses in die Vulkanisierungskammer eingespeist worden ist;

c) Messen der tatsächlichen Temperatur und des tatsächlichen Drucks in der Vulkanisierungskammer während der gesamten Vulkanisierungszeit und Steuern der Zufuhr des Gases mit dem niedrigen Wärmewirkungsgrad und des Fluids mit dem hohen Wärmewirkungsgrad sowie Abziehen des Gemisches entweder aus der Vulkanisierungskammer oder aus dem Mischer, um die Temperatur und den Druck auf einem vorbestimmten konstanten Wert zu halten, der für die Vulkanisierung während der Dauer des gesamten Vulkanisierungsverfahrens aufgrund der Verwendung einer Steuereinrichtung mit einem Microcomputer (7) optimal ist, welche in Abhängigkeit von Signalen aus einem Temperatursensor (6) und einem Drucksensor (5) arbeitet, wobei diese Sensoren entwender innerhalb bzw. außerhalb des Mischers angeordnet sind; wobei das Fluid (S) dann, wenn es einen niedrigeren Druck hat als das Gemisch in der Vulkanisierungskammer bzw. das im Mischer vom Nicht-Ejektor-Typ, entweder durch Saugwirkung des unter höherem Druck stehenden, in den Ejektor des Mischers (4) eingespeisten Gases (G) oder durch Abzug einer geeigneten Menge des Gemisches vom Mischer (4) vom Nicht-Ejektor-Typ eingespeist wird, um den Druck des Gemisches zu reduzieren.

2. Vorrichtung nach Anspruch 1, mit einer Einrichtung zur Herstellung eines Gemisches als vulkanisierendes Heizmedium durch Mischen eines Fluids mit einem hohen Wärmewirkungsgrad mit einem Gas mit einem niedrigeren Wärmewirkungsgrad, gekennzeichnet durch

einen Drucksensor (5) und einen Temperatursensor (6), welche entweder außerhalb oder innerhalb dieser Einrichtung angeordnet sind, die jeweils den Druck und die Temperatur des Gemisches erfasst und Signale abgibt;

eine Steuereinrichtung mit einem Microcomputer (7) zum Steuern des Öffnens und Schließens eines Ventils für das Gas mit dem niedrigen Wärmewirkungsgrad, eines Ventils für das Fluid mit dem hohen Wärmewirkungsgrad und/oder eines Abzugsventils zur Aufrechterhaltung des Drucks und der Temperatur des Gemisches auf einem vorbestimmten konstanten Wert, der für die Vulkanisierung optimal ist, wobei die Steuereinrichtung in Abhängigkeit von den Signalen des Drucksensors (5) und des Temperatursensors (6) arbeitet;

und eine Vulkanisierungskammer zur Vulkanisierung der Elastomerprodukte mittels des auf dem gewünschten konstanten Wert gehaltenen Gemisches.

3. Vorrichtung nach Anspruch 2, dadurch gekennzeichnet, daß die Einrichtung zur Herstellung des Gemisches ein Mischer vom Ejektor-Typ ist, der außerhalb der Vulkanisierungskammer angeordnet und mit dieser verbunden ist.

4. Vorrichtung nach Anspruch 2, dadurch gekennzeichnet, daß die Einrichtung zur Herstellung des Gemisches ein Mischer vom Nicht-Ejektor-Typ (4) ist, der außerhalb der Vulkanisierungskammer angeordnet und mit dieser verbunden ist.

**Revendications**

1. Procédé de vulcanisation d'un élastomère dans une chambre de vulcanisation en utilisant un mélange d'un gaz à faible capacité calorifique et d'un fluide caloporteur à capacité calorifique élevée, caractérisé en ce qu'il consiste, comme phases opératoires:

a) à introduire le gaz à faible capacité calorifique (G) et le fluide caloporteur à capacité calorifique élevée (S) dans un mélangeur (4) situé à l'extérieur de la chambre de vulcanisation, de façon à obtenir le mélange d'agent de vulcanisation, le mélangeur (4) étant soit du type à jet aspirant, soit du type sans jet aspirant,

b) à vulcaniser l'élastomère en utilisant, dès le début du processus de vulcanisation, le mélange qui a été introduit dans la chambre de vulcanisation,

c) à mesurer la température et la pression réelles régnant dans la chambre de vulcanisation ou dans le mélangeur pendant toute la durée du processus de vulcanisation et à régler l'amenée de gaz à faible capacité calorifique et du fluide caloporteur à capacité calorifique élevée, ainsi que l'évacuation du mélange hors de la chambre de vulcanisation ou hors du mélangeur, de manière à maintenir la température et la pression à un niveau constant préfixé qui est optimal pour la vulcanisation tout au long du processus de vulcanisation, grâce à l'utilisation d'une commande qui contient un micro-ordinateur (7) et qui fonctionne en réponse à des signaux provenant d'un capteur de température et d'un capteur de pression disposés à l'intérieur ou à l'extérieur du mélangeur, tandis que, dans le cas où le fluide (S) a une pression inférieure à celle du fluide mélangé se trouvant soit dans la chambre de vulcanisation, soit dans le mélangeur de type sans jet aspirant, ce fluide (S) est introduit soit par effet d'aspiration à l'aide du gaz sous pression élevée (G) introduit dans l'éjecteur du mélangeur (4), soit en évacuant dans une mesure appropriée le fluide mélangé hors du mélangeur de type sans jet aspirant (4), afin de réduire la pression de ce fluide mélangé.

2. Procédé selon la revendication 1, comprenant un moyen permettant de fournir un mélange formant un agent de chauffage servant à la vulcanisation, en mélangeant un fluide caloporteur à capacité calorifique élevée et un gaz à faible capacité calorifique, caractérisé par un capteur de pression (5) et un capteur de température (6) disposés à l'extérieur ou à l'intérieur dudit moyen et qui détectent respectivement la pression et la température du mélange et fournissent des signaux, par une commande qui contient un micro-ordinateur (7) et qui règle, en réponse aux signaux provenant du capteur de pression (5) et du capteur de température (6), l'ouverture et la fermeture d'une vanne de gaz à faible capacité calorifique, une vanne de fluide à capacité calorifique élevée et/ou une vanne d'évacuation, de façon à maintenir la pression et la temperature du mélange à un niveau constant préfixé, optimal pour la vulcanisation, et par une chambre de vulcanisation qui réalise la vulcanisation des produits élastomères à l'aide du mélange maintenu à ladite valeur constante voulue.

3. Procédé selon la revendication 2, caractérisé en ce que le moyen permettant de fournir le mélange est un mélangeur du type à jet aspirant qui est disposé à l'extérieur de la chambre de vulcanisation et est relié à celle-ci.

4. Procédé selon la revendication 2, caractérisé en ce que le moyen permettant de fournir le mélange est un mélangeur du type sans jet aspirant (4) qui est disposé à l'extérieur de la chambre de vulcanisation et est relié à celle-ci.

0 052 378

FIG 1

FIG 2

1

FIG 3